# EUROPEAN PATENT APPLICATION

(11) **EP 1 897 626 A1**
(43) Date of publication of application: **12.03.2008**
(21) Application number: 06018524.6
(22) Date of filing: 05.09.2006
(51) Int. Cl.: B05D 5/00, B65F 1/14, C09D 5/16, A47B 96/20

(54) **Dirt-resistant and non adhesive flat material**

(71) Applicant: SurfaceSolutions GmbH, 8093 Zürich (CH)
(72) Inventor: Tosatti, Samuele, 8050 Zürich (CH); Zürcher, Stefan, 8052 Zürich (CH)
(74) Representative: Schaad, Balass, Menzl & Partner AG

(57) **Abstract**

The present invention relates to a flat material comprising a hard substrate and a coating arranged thereon. The coating comprises at least one hydrophilic polymer, which loosely confines water, thereby imparting dirt-resistant and non-adhesive properties to the material.

## Description

The present invention relates to a flat material comprising a hard substrate and a coating arranged thereon. The invention also relates to the use of the flat material as a dirt-resistant and non-adhesive material.

Nowadays, an increased sensitivity to environmental issues has brought topics such as pollution and littering into the focus of people. In addition, environmental pollution is subject to numerous and increasingly severe legislative activities. For instance, in many countries there are quite heavy fines for littering.

Within the prior art there are a number of devices proposed to deal with (problematic small) waste.

WO 2006/012753 describes a portable container for the disposal of small wastes such as cigarette stubs or used chewing gums. The inner surface of said container may comprise a special coating with hydrophobic properties or a paint coating providing for an effect known as lotus-effect.

Further small waste containers are disclosed in JP 09-255035 and US 4,078,662. Materials in the form of a film are employed to prevent the used chewing gum from sticking to the walls of the waste containers.

Various other pocket-sized containers for used chewing gum are described in JP 2005-313983, IE 20040371, DE 101 00 208 and WO 2005/102846.

US 2002/0148836 discloses a portable trash receptacle which can be used for the containment and disposal of small items, such as candy wrappers, tissues, gum, etc. The receptacle may be internally coated with a nonstick type substance, e.g silicone or oil based sprays.

In WO 01/47380 a combination of a cigarette and waste container is proposed. Said cigarette pack houses a cigarette packet and a individually resealable waste receptacle. Similar devices are described in US 3,413,981, DE 202 15 821, EP 0 168 655, US 6,170,490, FR 2 739 532, and JP 09-047275.

EP 0 246 328 describes a transparent polyethylene film and its production. The film is suited for use as wrapping film for containers of cigarettes, caramels, chocolates and confectionary such as chewing gum or candy.

Despite numerous attempts to provide a (portable) waste receptacle which is convenient and practicable for use, in particular easy to clean, none of the receptacles known in the state of the art is fully satisfactory. For instance, some of the waste receptacles require the use of a wrapping paper to prevent used chewing gums from sticking to the walls of the waste receptacle. This is particularly inconvenient.

Flat material as used herein means objects wherein one dimension is much smaller than the other two dimensions. Examples of such objects are sheet metals, plates etc. The flat material does not necessarily have to be even. It may also be of a round, spherical or curved form.

Waste or dirt as used herein means dust, small particles such as ash of cigarettes and bigger particles, e.g. cigarette stubs, used chewing gum, wrapping paper of candy and the like.

Dust as used herein comprises all particles having a size of less than 1 mm. Small particles are in the size range of 1 to 5 mm and bigger particles have a size of more than 5 mm.

Hard substrate as used herein means a material which is dimensionally and inherently stable. Examples for such materials are metals, wood, glass, injection moldable polymers and the like.

The problem solved by the present invention is to provide a flat material which is easy to clean.

The problem is solved by a flat material according to claim 1. Further preferred embodiments are the subject-matter of claims 2 to 10.

The coating of the flat material of the present invention is highly dirt-resistant and non-adhesive and comprises only widely used non-toxic components. Thus, the coating avoids or at least highly minimizes a common disadvantage of materials used today which are not at all or insufficiently inert against the adhesion of dirt or the sticking of waste particles, e.g. chewing gum. Further, the coating is transparent, usually colorless and odorless.

The coating in the form of a monolayer is usually colorless. However, if the coating is in the form of a hydrogel it is possible to impart it a color by adding a dye. The coating may also comprise a special label such as a fluorescent label which will only be visible if an appropriate illumination device is used. In case the coating is colorless a colored hard substrate may be employed.

Due to the coating the flat material of the present invention is also very easy to clean. For instance, one can simply flush the flat material with water in order to remove waste. Since the hydrophilic polymer arranged on the hard substrate loosely binds water, the flushing not only removes waste particles but also regenerates a water-film retained on the surface of the flat material.

Also this explanation is not to be construed as limiting, it is believed that the water-film is crucial for the achievement and maintenance of the dirt-resistant and non-adhesive properties.

There is no need for any additional accessories, such as papers employed to wrap used chewing gum to prevent it from sticking to the wall of a waste receptacle. This very much simplifies the handling of portable waste containers, in particular for children. The flat material of the present invention may also be employed for chairs and tables in schools, for furniture in general or for public waste containers, e.g. in parks or in public transport means such as busses, trains or tramways, where it greatly reduces the work for emptying the waste containers.

The flat material is also highly weatherproof. Further, ultraviolet (UV) radiation which is a problem for most other materials does hardly affect the flat material according to the present invention.

It was surprisingly found that in order to render a surface of a hard substrate non-sticky, untacky, non-adhesive to used chewing gum and the like, the surface needs to be maintained wet. This can be achieved by a thin film of water deposited on it. To obtain a permanent water retention on the surface a permanent coating providing for such water retention is applied to the surface. Such a surface is only covered with a invisible, very thin film of water. It looks virtually the same as normal, uncoated surfaces.

The flat material according to the present invention comprises a hard substrate and a coating arranged thereon. The coating comprises at least 20% by weight water, based on the total weight of the coating, and at least one hydrophilic polymer. Preferably the coating comprises at least 40% by weight water, most preferably at least 60% by weight water. The precise water content of the coating depends at least partly on the ambient temperature and humidity. A higher relative humidity increases the water content of the coating. In case of example 4 (Field test) this is achieved by activating the surface with water rinsing and having a closed container. The flat material according to the present invention is preferably employed in a temperature range between 0°C to 45°C.

The attachment of the coating to the surface of the hard substrate prevalently but not exclusively occurs by hydrophobic-hydrophobic interactions, electrostatic interactions or covalent bonds.

For this purpose, the surface of the hard substrate can be treated with various methods, e.g. plasma-cleaning, UV/ozone cleaning, corona treatment, flaming of the surface. These treatments remove contaminations and impart the surface a hydrophilic and usually negatively charged character.

In preferred embodiments the coating may be applied in the form of a monomolecular layer or a film which is thicker than the monomolecular adlayer (adsorbed layer). A hydrogel (intended as a material with a high degree of incorporated or loosely bound water) is a further possible form of the coating.

After treating the hard substrate to render it hydrophilic and negatively charged (e.g. by treating with air-plasma) the coating can be applied for instance by dipping the hard substrate in aqueous solution comprising the desired hydrophilic polymer and subsequent rinsing and drying.

Plasma coating is a further method to apply the coating on the hard substrate. Cold plasma induced surface modification represents an attractive alternative for tailoring surface characteristics of materials. The method is dry and this greatly increases manufacturability over the wet chemistry approach, representing an important advantage for commercialization. Monomer costs are low because reactions occur at low pressure and the films are very thin. The coatings come from the reactor in a sterile form. In addition, the plasma treatment is limited to the outermost surface of a material and does not affect its mechanical properties.

Another method for making a hydrophilic and lubricious coating includes coatings, wherein the coating comprises a hydrophilic polymeric unit layer cross-linked with a plasma deposited double bond monomer. The hydrophilic polymeric unit can include ethylene oxide with one or more primary or secondary alcohol groups or glycosaminoglycans such as hyaluronic acid, and the double bond monomer includes monomers containing at least one double bond, preferably a CC double bond, CN double bond or CO double bond, including N-trimethylsilylallylamine, ethylene, propylene and allyl alcohol.

Further, it is possible to apply the coating on the hard substrate by UV-induced in situ polymerization, for instance of PEG-acrylate and PEG-diacrylate.

The application of a film which is thicker than a monomolecular layer and/or the introduction of a surface structure in terms of an improved surface roughness combined with a coating is particularly useful to achieve a high dirt-resistant and non-adhesive effect since this will increase the amount of water present at the surface of the hard substrate.

In a further preferred embodiment the flat material additionally comprises an intermediate layer arranged between the hard substrate and the coating. The intermediate layer can be securely attached to the surface, but it is also conceivable that the intermediate layer is removable, e.g. in the form of polyethylene film.

In another preferred embodiment the hydrophilic polymer comprises at least one component selected from the group consisting of poly(alkylene oxide) (PEO), poly (ethylene glycol) (PEG), proteins, polysaccharides, poly(vinyl alcohol) (PVA), polyacrylat (PA), polymethyloxazoline (PMOXA), polyethyloxazoline (PEOXA), polyvinylpyrrolidone (PVP), polyaminoacids having a hydrophilic side chain (e.g. polylysine, polyarginine, polytyrosine, polyglutamin, polyglutamic acid, polyasparigine, polyaspartic acid, polyserine, polythreonine and polyhistidine), polyallylamine, polyethyleneimine, and any mixture thereof. Preferred polymers are PEG, PMOXA and PVP. These polymers are hydrophilic, water-soluble but not charged in water. Most preferred are polymers comprising PEG-chains grafted on a polymer backbone that are adsorbed or otherwise attached to the surface in a brush-like conformation, e.g. Polylysin-g-PEG. The coating density is at least 50ng/cm² of polymer on the surface, preferably more than 100ng/cm².

The hard substrate or the intermediate layer of the flat material of the present invention comprises at least one component selected from the group consisting of polyethylene (PE), polypropylene (PP), poly(ethylene terephtalate) (PET), poly(acrylonitrile butadiene styrene) (ABS), cyclic olefin copolymers (e.g. the commercially available TOPAS Cyclic Olefin Copolymer), polystyrene (PS), polyamide (PA), and any mixtures thereof.

Further possible components of the hard substrate or the intermediate layer can comprise any metal or metal oxide, preferably sheet metals, bronze, brass, nickel alloys, gold, silver, platin, copper, zinc, chromium, aluminum, steel, titanium, and magnesium alloys. Wood, paints, lacquers, epoxy resins are also possible components.

The materials comprised in the hard substrate must be dimensionally and inherently stable.

In a preferred embodiment the flat material may be employed for waste containers that are made of said flat material, more preferably a portable waste container and most preferably a portable used chewing gum waste container.

In waste containers it is possible to include a sponge or the like inside the container in order to have a moisture-reservoir which serves to maintain the water film in the coating. A microstructured surface comprising small cavities and coated with the hydrophilic polymer can be used to serve as water reservoir.

The flat material can also be used for furniture, preferably for seats and tables. In yet another preferred embodiment the flat material according to present invention is used as a dirt-resistant and non-adhesive material.

The figures purely schematically shows:
- Fig. 1: Schematic drawing of a PAAM-g-PEG coating. Coating thickness: Dry state = 1.5 nm / wet state = 10 nm
- Fig. 2: Coated test containers showing non-sticky behavior after 3 month field test (see text for experimental details) (white cap) in comparison to plasma treated container (yellow cap).

### Examples

Prior to use the flat material of the present invention has to be rinsed with water. This allows the forming of a thin water-film on the surface. Simply by water rinsing it is possible to remove dirt and regenerate the surface properties in case it has been dried out in between.

Three different approaches useful to manufacture a device with a chewing-gum adhesion resistant surface are described below:
- PEGylated monomolecular coatings (dip and rinse or spray coating)
- Plasma deposited PEGylated adlayers
- Surface bound thin hydrogel coatings

The presented coating strategies are applicable to different types of polymers or metal/metal oxide surfaces like but not only the hard substrate materials mentioned above.

Abbreviations used in the following mean PAAm: poly allylamin; PLL: poly-Lysine; PEI: polyethylene imine.

### 1. PEGylated Monomolecular coatings (Dip and rinse approach)

### 1a) Polycationic backbone grafted PEG (PAAm-g-PEG, PLL-g-PEG, PEI-g-PEG) Monolayers

- Pocket-sized tubes made of PET are used as samples.
- Samples consisting of PET were treated with an air-plasma (3 mbar, 2 min) in order to render the surface hydrophilic and negatively charged
- The samples were then immersed in a solution containing the surface active polymer for 1-30 min (aqueous polymer solution: concentration 100 mg/L)
- The coated tubes were rinsed with pure water and subsequently dried in air.

### 1b. Polypropyleneoxide-block-polyethyleneoxide PPO-PEG (Pluronics)

- Non-treated hydrophobic polymeric tubes are directly immersed in a aqueous solution of PLURONIC® F108 NF (Poloxamer 338 NF, BASF Mount Olive, New Jersey 07828-1234, US), Germany) for 1-30 min at a concentration of 10-200 mg/Liter water.
- The coated tubes are rinsed with water and dried in air.

In an analogue way a waste container made of metal was coated. The coating was applied on the hard substrate by spray coating.

### 2. Hydrophilic (PEG) layers using a Plasma coating

Plasma coating can be used to apply hydrophilic (PEG) layers on a surface. This kind of coatings is useful to prevent chewing gum to stick to a surface.

A cold-plasma-enhanced process was employed to deposit coatings containing PEO/PEG-like structures onto various substrate surfaces. Cold plasma is useful to treat surfaces (e.g. oxidation, functionalization) or to deposit specific coatings onto organic and inorganic substrates. Surfaces of stainless steel (type 304, #4 finish) were plasma-modified using various gases and monomers.

Portable waste containers made of aluminum were used as samples.

Samples were treated with 12-crown-4-ether and tri(ethylene glycol) dimethyl ether (triglyme) in a parallel-plate cold plasma reactor with heating facilities for the monomer and reaction chamber. High resolution electron spectroscopy for chemical analysis showed a high concentration of ethylene glycol-type functionality (C-O bonds) on the surfaces of the treated samples.

### 3. Hydrogels

### 3a. PEG-hydrogel

A PEG hydrogel can be applied by coating of a surface with a layer containig a UV- Radical initiator, PEG acrylate and PEG diacrylate. This layer is illuminated with UV-light in an inert atmosphere to polymerize and crosslink the layer and in the same step covalently link it to the substrate surface. This hydrogel is highly swellable in water and resists the sticking of chewing gum.

### 3b. PVA-hydrogel:

A PVA hydrogel can be applied by coating a surface with a layer containing a azlacton modified PVA or acrylate modified PVA as crosslinking agent together with a UV-Radical initiator such as benzophenone or Ciba® IRGACURE® 127. This layer is illuminated with UV-light in an inert atmosphere to polymerize and crosslink the layer and in the same step covalently link it to the substrate surface. The connection to the surface can be improved by precoating the surface with a radical initiator, such as benzophenone or Ciba® IRGACURE® 127. This hydrogel is highly swellable in water and resists the sticking of chewing gum.

### 4. Results field test:

A Series of green bodies of PET-bottles have been coated according to example 1. The tubes were distributed to different test-users in combination with chewing-gum of different brands and taste. Prior first use, the container was activated by quick rinsing under water. Subsequently the containers were used for up to 3 month as temporary storage unit for used chewing-gum (different brands and taste). Each time the containers were emptied the test-user had to record if the device remains functional. Functional means, that the chewing gums do not stick to the container and could be remove by simply turning upside-down or after slight shaking. The comparison between coated and none coated containers proofed, that if they were not coated or only plasma treated to make them hydrophilic, the gums started to stick onto the device after a short time. In the case of the coated ones, even after use for three month, the gums did not stick. This test was performed during summertime under various ambient conditions and temperatures ranging from 10°C up to 35 °C.

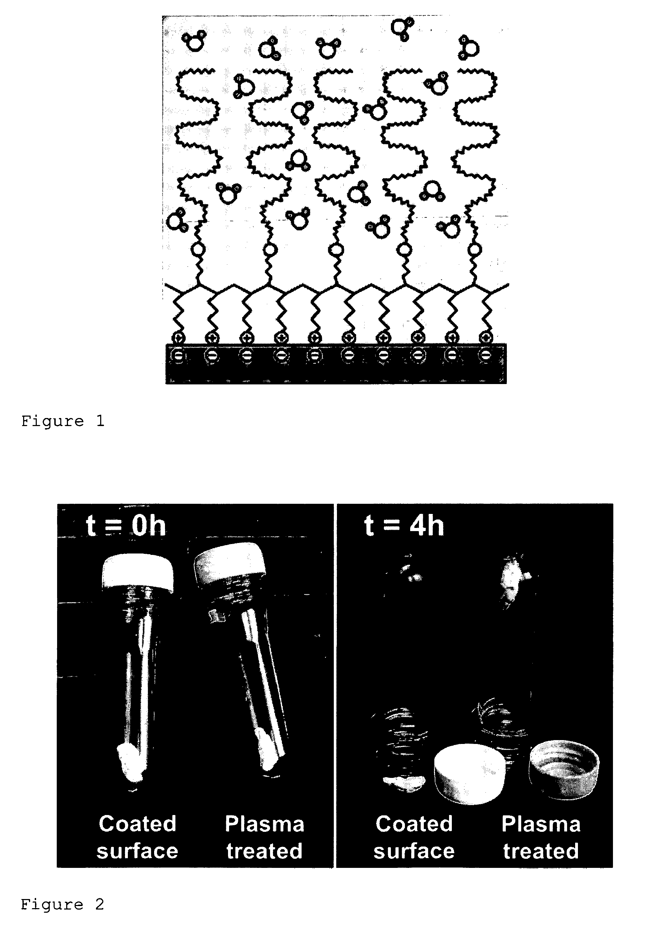

The results are shown in Figure 2.

## Claims

1. A flat material comprising a hard substrate and a coating arranged thereon, wherein the coating comprises at least 20% by weight water, based on the total weight of the coating, and at least one hydrophilic polymer.

2. The flat material according to claim 1, additionally comprising a intermediate layer arranged between the hard substrate and the coating.

3. The flat material according to claim 1 or 2, wherein the coating is in the form of a monomolecular layer.

4. The flat material according to claim 1 or 2, wherein the coating is in the form of a hydrogel.

5. The flat material according to any of claims 1 to 4, wherein the polymer comprises at least one component selected from the group consisting of poly(alkylene oxide), poly (ethylene glycol), proteins, polysaccharides, poly(vinyl alcohol), polyacrylat, polymethyloxazoline, polyethyloxazoline, polyvinylpyrrolidone (PVP), polyaminoacids having a hydrophilic side chain, polyallylamine, polyethyleneimine, and any mixture thereof.

6. The flat material according to any of claims 1 to 5, wherein the hard substrate comprises at least one component selected from the group consisting of • polyethylene, polypropylene, poly(ethylene terephtalate), poly(acrylonitrile butadiene styrene), cyclic olefin copolymers, polystyrene, polyamide, and any mixtures thereof, wood, paints, lacquers, epoxy resins, any metal or metal oxide, preferably sheet metals, aluminum, steel, titanium, magnesium alloys, bronze, brass, nickel alloys, gold, silver, platin, copper, zinc, and chromium.

7. Waste container made of the flat material according to any of claims 1 to 6, preferably a portable waste container.

8. Waste container according to claim 7, wherein the container is a portable used chewing gum waste container.

9. Furniture comprising the flat material according to any of claims 1 to 6.

10. Use of the flat material according to any of claims 1 to 6 as a dirt-resistant and non-adhesive material.
